# EUROPÄISCHE PATENTANMELDUNG

(11) **EP 1 816 751 A1**
(43) Veröffentlichungstag der Anmeldung: **08.08.2007**
(21) Anmeldenummer: 07002152.2
(22) Anmeldetag: 01.02.2007
(51) Int. Cl.: H04B 1/16

(54) **Integrierte Schaltung mit deaktivierbaren Pegelwandlern zwischen Schaltungskomponenten**

(30) Priorität: 03.02.2006 DE 102006005779
(71) Anmelder: ATMEL Germany GmbH, 74072 Heilbronn (DE)
(72) Erfinder: Dathe, Dipl.-Ing. Lutz, 01109 Dresden (DE)
(74) Vertreter: Meier, Christof

(57) **Zusammenfassung**

Die Erfindung betrifft eine integrierte Schaltung (100) mit mindestens einer ersten Schaltungskomponente (110), und mit mindestens einer zweiten Schaltungskomponente (120), wobei die erste Schaltungskomponente (110) über einen Pegelwandler (130) mit der zweiten Schaltungskomponente (120) verbunden ist.

Erfindungsgemäß ist der Pegelwandler (130) von der ersten Schaltungskomponente (110) wahlweise aktivierbar bzw. deaktivierbar, um einen Datenaustausch zwischen der ersten Schaltungskomponente (110) und der zweiten Schaltungskomponente (120) zu ermöglichen beziehungsweise zu verhindern.

## Beschreibung

Die Erfindung betrifft eine integrierte Schaltung mit mindestens einer ersten Schaltungskomponente, und mit mindestens einer zweiten Schaltungskomponente, wobei die erste Schaltungskomponente über einen Pegelwandler mit der zweiten Schaltungskomponente verbunden ist. Die Erfindung betrifft ferner ein Betriebsverfahren für eine solche integrierte Schaltung.

Integrierte Schaltungen dieser Art sind bekannt, und der Pegelwandler wird üblicherweise dazu eingesetzt, die Pegel von Signalen wie z.B. Spannungspegel umzusetzen, die zwischen den über den Pegelwandler miteinander verbundenen Schaltungskomponenten auf entsprechenden Daten- bzw. Steuerleitungen ausgetauscht werden.

Es ist Aufgabe der vorliegenden Erfindung, eine integrierte Schaltung der vorstehend genannten Art mit gesteigerter Flexibilität und Betriebssicherheit anzugeben.

Diese Aufgabe wird bei einer gattungsgemäßen integrierten Schaltung erfindungsgemäß dadurch gelöst, dass der Pegelwandler von der ersten Schaltungskomponente wahlweise aktivierbar bzw. deaktivierbar ist, um einen Datenaustausch zwischen der ersten Schaltungskomponente und der zweiten Schaltungskomponente zu ermöglichen beziehungsweise zu verhindern.

Dadurch ist es beispielsweise möglich, den Pegelwandler gezielt immer dann zu deaktivieren, wenn kein Datenaustausch zwischen der ersten Schaltungskomponente und der zweiten Schaltungskomponente stattfindet. Besonders vorteilhaft kann auf diese Weise auch verhindert werden, dass undefinierte Signalzustände, die z.B. vorübergehend von der zweiten Schaltungskomponente ausgehen können, an die erste Schaltungskomponente weitergeleitet werden, wodurch die Betriebssicherheit der integrierten Schaltung gesteigert wird. Solche undefinierten Signalzustände können beispielsweise dann auftreten, wenn die zweite Schaltungskomponente deaktiviert wird, insbesondere um in einen Ruhezustand oder dergleichen überzugehen. Ebenso ist es denkbar, den Pegelwandler dann zu deaktivieren, wenn der Verdacht vorliegt, dass die zweite Schaltungskomponente eine Betriebsstörung oder einen sonstigen Defekt aufweist.

Eine Aktivierung des Pegelwandlers kann dementsprechend gezielt immer dann erfolgen, wenn ein Datenaustausch zwischen der ersten Schaltungskomponente und der zweiten Schaltungskomponente stattfinden soll bzw. wenn sichergestellt ist, dass keine undefinierten Signalzustände von der zweiten Schaltungskomponente ausgehen.

Das Aktivieren bzw. Deaktivieren des Pegelwandlers kann bei einer bevorzugten Ausführungsform der vorliegenden Erfindung durch die Verwendung einer verhältnismäßig einfachen Logikschaltung erfolgen, die eine an sich bekannte Verriegelung eines oder mehrerer der über den Pegelwandler geführten Signale, beispielsweise mittels eines oder mehrerer UND-Gatter, vorsieht. Diese Logikschaltung kann vorteilhaft auch zumindest teilweise in den Pegelwandler integriert sein.

Zusätzlich zu der reinen Verriegelung der Signale kann der Pegelwandler im Rahmen der Deaktivierung auch von einer ihm zugeordneten Versorgungsspannung getrennt werden, was insbesondere bei solchen Konfigurationen zweckmäßig ist, bei denen der Pegelwandler eine nicht vernachlässigbare Ruhestromaufnahme aufweist. In diesem Fall kann die Verriegelung der Signale durch eine dem Pegelwandler zugeordnete Logikschaltung bewirkt werden, die beispielsweise zwischen der ersten Schaltungskomponente und dem Pegelwandler angeordnet ist. Hierdurch wird vorteilhaft auch das Auftreten von irregulären bzw. undefinierten Signalzuständen an entsprechenden Signaleingängen der ersten Schaltungskomponente vermieden, das ansonsten aufgrund des Trennens des Pegelwandlers selbst von seiner Versorgungsspannung auftreten könnte.

Analog zu der zwischen der ersten Schaltungskomponente und dem Pegelwandler angeordneten Logikschaltung kann auch eine weitere Logikschaltung vorgesehen sein, die zwischen der zweiten Schaltungskomponente und dem Pegelwandler angeordnet ist und zur Verriegelung der Signale gegenüber der zweiten Schaltungskomponente dient.

Bei einer bevorzugten Ausführungsform der vorliegenden Erfindung ist der Pegelwandler so konfiguriert, dass er in seinem deaktivierten Zustand ein vorgebbares Signal an die erste Schaltungskomponente und/oder an die zweite Schaltungskomponente ausgibt. Im Falle einer einzigen Signalleitung handelt es sich hierbei beispielsweise um einen vorgebbaren Logikpegel. Falls mehrere Signalleitungen über den Pegelwandler geführt werden, kann dementsprechend für jede dieser mehreren Signalleitungen ein vorgebbarer Logikpegel an die erste Schaltungskomponente und/oder an die zweite Schaltungskomponente ausgegeben werden, während der Pegelwandler deaktiviert ist.

Bei einer weiteren ganz besonders vorteilhaften Ausführungsform der vorliegenden Erfindung weist die erste Schaltungskomponente einen ersten Betriebsspannungsbereich auf, und die zweite Schaltungskomponente weist einen von dem ersten Betriebsspannungsbereich verschiedenen zweiten Betriebsspannungsbereich auf. Hierdurch ist es möglich, in der erfindungsgemäßen integrierten Schaltung verschiedenartige Schaltungskomponenten vorzusehen, so dass eine gesteigerte Flexibilität der integrierten Schaltung gegeben ist.

Besonders vorteilhaft kann die erste Schaltungskomponente beispielsweise in einer ersten Halbleitertechnologie mit Strukturgrößen von etwa 0,36 µm ausgebildet sein, während die zweite oder weitere Schaltungskomponenten in einer anderen Halbleitertechnologie ausgebildet sind, beispielweise mit Strukturgrößen von etwa 0,18 µm. Durch diese Kombination verschiedener Halbleitertechnologien kann die erfindungsgemäße integrierte Schaltung hinsichtlich ihrer Funktionalität und der benötigten Chipfläche optimiert werden.

Besonders vorteilhaft weist die erste Schaltungskomponente einer weiteren Erfindungsvariante zufolge einen größeren Betriebsspannungsbereich auf als die zweite Schaltungskomponente. Diese Konfiguration ist z.B. bei dem vorstehend genannten Beispiel gegeben. Die erste Schaltungskomponente mit Strukturgrößen von etwa 0,36 µm weist einen Betriebsspannungsbereich von etwa 1,8 V bis etwa 3,75 V auf, während die zweite Schaltungskomponente mit Strukturgrößen von etwa 0,18 µm einen Betriebsspannungsbereich von etwa (1,8 ± 10%) V aufweist.

Durch diese Aufteilung der Betriebsspannungsbereiche ist vorteilhaft die Möglichkeit gegeben, die erste Schaltungskomponente direkt an eine externe Spannungsquelle wie z.B. an eine Batterie anzuschließen, während durch die zweite Schaltungskomponente mit ihrer geringeren Strukturgröße und ihrem entsprechend geringeren Betriebsspannungsbereich gleichzeitig der Einsatz von Komponenten mit einem höheren Integrationsgrad möglich ist.

Besonders vorteilhaft weist eine weitere Ausführungsform der erfindungsgemäßen integrierten Schaltung einen Anschluss zur Verbindung der integrierten Schaltung mit einer externen Spannungsquelle auf. Vorzugsweise ist dieser Anschluss direkt mit der ersten Schaltungskomponente verbunden.

Bei einer weiteren ganz besonders vorteilhaften Ausführungsform der vorliegenden Erfindung ist mindestens ein von der ersten Schaltungskomponente aktivierbarer beziehungsweise deaktivierbarer Spannungsregler zur Versorgung der zweiten Schaltungskomponente und/oder weiterer Schaltungskomponenten vorgesehen, so dass die Spannungs- bzw. Energieversorgung der betreffenden Schaltungskomponenten selektiv abgeschaltet werden kann, wodurch sich die Leistungsaufnahme der integrierten Schaltung entsprechend verringert.

Besonders vorteilhaft ist - wie bereits beschrieben - durch den erfindungsgemäß steuerbaren Pegelwandler insbesondere während eines Anschaltens bzw. Abschaltens der Spannungs- bzw. Energieversorgung die Möglichkeit gegeben, einen Datenaustausch zwischen der ersten Schaltungskomponente und den weiteren Schaltungskomponenten zu verhindern, um dem Auftreten von undefinierten Signalzuständen an den entsprechenden Signaleingängen der ersten Schaltungskomponente vorzubeugen.

Durch die erfindungsgemäße Deaktivierung eines z.B. die zweite Schaltungskomponente versorgenden Spannungsreglers wird vorteilhaft einerseits die Leistungsaufnahme des Spannungsreglers an sich minimiert, d.h. die für seinen Betrieb erforderliche Leistung. Darüber hinaus wird eine insbesondere bei geringen Strukturgrößen aufgrund von Leckströmen verursachte, nicht vernachlässigbare Leistungsaufnahme der zweiten Schaltungskomponente selbst vermieden.

Während die zweite bzw. weitere Schaltungskomponenten der erfindungsgemäßen integrierten Schaltung bei Nichtgebrauch in der vorstehend beschriebenen Weise deaktiviert werden, bleibt die erste Schaltungskomponente bevorzugt permanent mit der ihr zugeordneten Spannungsversorgung wie z.B. einer externen Batterie oder dergleichen verbunden. Aufgrund der im Vergleich zu der zweiten Schaltungskomponente verhältnismäßig großen Strukturgrößen von z.B. etwa 0,36 µm sind die Leckströme innerhalb der ersten Schaltungskomponente deutlich kleiner, so dass die hierdurch hervorgerufene Leistungsaufnahme üblicherweise vernachlässigbar ist.

Dennoch werden bevorzugt möglichst viele Bauelemente bzw. Komponenten der erfindungsgemäßen integrierten Schaltung in Schaltungskomponenten mit möglichst geringen Strukturgrößen angeordnet, um die damit einhergehenden Vorteile der höheren Integrationsdichte und der Deaktivierbarkeit entsprechender Spannungsregler nutzen zu können.

Um einen zuverlässigen Betrieb der integrierten Schaltung zu gewährleisten, ist bei einer weiteren sehr vorteilhaften Ausführungsform der vorliegenden Erfindung mindestens ein in der ersten Schaltungskomponente angeordnetes Speicherelement, insbesondere ein Flip-Flop, und/oder ein in der ersten Schaltungskomponente angeordneter Zustandsautomat vorgesehen. Der Zustandsautomat kann beispielsweise aus einer Vielzahl von Flip-Flops gebildet sein. Das/die Speicherelemente bzw. der Zustandsautomat können zur Speicherung von Betriebszuständen der verschiedenen Schaltungskomponenten der integrierten Schaltung verwendet werden und gewährleisten einen permanenten Datenerhalt, weil die erste Schaltungskomponente bevorzugt direkt mit einer externen Spannungsversorgung verbunden ist bzw. nicht wie die weiteren Schaltungskomponenten temporär deaktiviert wird.

Auch bei der Verwendung der vorstehend genannten Speicherelemente bzw. eines Zustandsautomaten ist durch die erfindungsgemäße Steuerbarkeit des Pegelwandlers sichergestellt, dass ggf. mit den Speicherelementen verbundenen Signalleitungen, die zu temporär deaktivierbaren Schaltungskomponenten führen, keine undefinierten Signale zugeführt werden.

Bei einer weiteren sehr vorteilhaften Ausführungsform der vorliegenden Erfindung ist vorgesehen, dass die erste Schaltungskomponente eine Kommunikationsschnittstelle aufweist, die über einen Anschluss mit einer externen Komponente verbindbar ist.

Über diese Kommunikationsschnittstelle kann der integrierten Schaltung beispielsweise signalisiert werden, dass ein Ruhezustand anzunehmen ist, in dem beispielsweise die zweite Schaltungskomponente beziehungsweise deren Spannungsregler und gegebenenfalls auch der Pegelwandler zu deaktivieren ist. Ebenso kann ein Aktivieren der zweiten Schaltungskomponente beziehungsweise ihres Spannungsreglers durch eine entsprechende Datenübertragung an die integrierte Schaltung über die Kommunikationsschnittstelle initiiert werden.

Bei einer weiteren sehr vorteilhaften Ausführungsform der erfindungsgemäßen integrierten Schaltung ist vorgesehen, dass die integrierte Schaltung mindestens eine Schaltungskomponente zur Realisierung eines Funk-Transceivers aufweist. Beispielsweise kann ein derartiger Funk-Transceiver kompatibel sein zu dem IEEE 802.15.4/ZigBee Standard oder dergleichen. Durch die erfindungsgemäße Steuerbarkeit des Pegelwandlers und die damit einhergehende erhöhte Flexibilität und Betriebssicherheit der integrierten Schaltung insbesondere auch während einer temporären Deaktivierung der zweiten bzw. weiterer Schaltungskomponenten ist die Integration eines Funk-Transceivers in die erfindungsgemäße integrierte Schaltung besonders zweckmäßig. Aufgrund der gesteigerten Betriebssicherheit und der Möglichkeit zur Reduktion der Leistungsaufnahme von Schaltungskomponenten können mit der erfindungsgemäßen integrierten Schaltung z.B. Sensorelemente oder sonstige Baugruppen mit einer Funkschnittstelle realisiert werden, die auch bei einem reinen Batteriebetrieb eine verhältnismäßig hohe Betriebsdauer von beispielsweise mehr als zwei Jahren aufweisen.

Die hohe Betriebsdauer ist insbesondere dann zweckmäßig, wenn große Sensornetzwerke aufgebaut werden sollen, die beispielsweise mehrere hundert Sensorelemente aufweisen, von denen jedes Sensorelement eine erfindungsgemäße integrierte Schaltung sowie ggf. weitere Komponenten wie z.B. Sensoren und dergleichen enthält. Die hohe Betriebssicherheit und Betriebsdauer der erfindungsgemäßen integrierten Schaltung ermöglicht eine Vergrößerung der Wartungsintervalle entsprechender Sensorelemente oder macht eine Wartung völlig überflüssig. Dadurch können insbesondere die bei herkömmlichen Systemen anfallenden Wartungskosten, z.B. für Batteriewechsel usw., reduziert werden, wodurch der Einsatz großer Sensornetzwerke wirtschaftlich wird.

Neben einem Funk-Transceiver können auch weitere Schaltungskomponenten in die erfindungsgemäße integrierte Schaltung integriert werden, die z.B. im Rahmen eines Ruhezustands temporär deaktivierbar sind und bei denen eine zumindest teilweise Speicherung ihrer Betriebsinformationen innerhalb der ersten Schaltungskomponente zweckmäßig ist.

Als eine weitere Lösung der Aufgabe der vorliegenden Erfindung ist ein Verfahren gemäß dem Patentanspruch 10 angegeben, wobei der Pegelwandler von der ersten Schaltungskomponente wahlweise aktiviert beziehungsweise deaktiviert wird, um einen Datenaustausch zwischen der ersten Schaltungskomponente und der zweiten Schaltungskomponente zu ermöglichen beziehungsweise zu verhindern.

Bevorzugt ist ferner eine Variante des erfindungsgemäßen Verfahrens, bei der ein Spannungsregler zur Versorgung der zweiten Schaltungskomponente und/oder weiterer Schaltungskomponenten von der ersten Schaltungskomponente deaktiviert wird, um die Leistungsaufnahme der integrierten Schaltung zu verringern.

Bei einer weiteren Ausführungsform des erfindungsgemäßen Verfahrens ist vorgesehen, dass der Spannungsregler zur Versorgung der zweiten Schaltungskomponente und/oder weiterer Schaltungskomponenten von der ersten Schaltungskomponente aktiviert wird.

Besonders vorteilhaft ist es auch, wenn der Pegelwandler nach dem Spannungsregler aktiviert wird, vorzugsweise nach Ablauf einer vorgebbaren Wartezeit seit dem Aktivieren des Spannungsreglers. Dadurch wird sichergestellt, dass erst dann ein Datenaustausch über den Pegelwandler stattfinden kann, wenn die von dem Spannungsregler versorgte Schaltungskomponente ordnungsgemäß mit ihrer Betriebsspannung versorgt wird und dementsprechend gültige Signale über den Pegelwandler an die erste Schaltungskomponente aussendet. Bei dieser Verfahrensvariante ist die Wartezeit in Abhängigkeit des Einschalt- bzw. Betriebsverhaltens des zu aktivierenden Spannungsreglers bzw. der von ihm versorgten Schaltungskomponente zu wählen.

Bei einer weiteren vorteilhaften Variante des erfindungsgemäßen Verfahrens ist vorgesehen, dass der Pegelwandler erst dann aktiviert wird, wenn der Spannungsregler das Erreichen seines Normalbetriebs signalisiert hat, bei dem der Spannungsregler seine Nenn-Ausgangsspannung abgibt. Die Signalisierung kann beispielsweise über eine hierfür vorgesehene Steuerleitung erfolgen, die den Spannungsregler mit einer in der ersten Schaltungskomponente vorgesehenen Steuerlogik verbindet.

Generell kann eine Steuerung des Pegelwandlers und/oder von Spannungsreglern durch eine in der ersten Schaltungskomponente vorgesehene Steuerlogik erfolgen, die beispielsweise auch in Form des bzw. eines Zustandsautomaten realisiert sein kann.

Bei einer anderen vorteilhaften Verfahrensvariante ist vorgesehen, dass der Pegelwandler vor dem Spannungsregler deaktiviert wird, damit ein Datenaustausch über den Pegelwandler auch während des Deaktivierens des Spannungsreglers wirksam verhindert wird.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und in der Beschreibung erwähnten Merkmale jeweils einzeln für sich oder in beliebiger Kombination erfindungswesentlich sein.

In der Zeichnung zeigt:
- Figur 1a: ein schematisches Blockschaltbild einer ersten Ausführungsform der integrierten Schaltung,
- Figur 1b: eine weitere Ausführungsform der erfindungsgemäßen integrierten Schaltung,
- Figur 2: ein unter Benutzung der erfindungsgemäßen integrierten Schaltung realisiertes Sensornetzwerk,
- Figur 3a: ein Flussdiagramm einer ersten Ausführungsform des erfindungsgemäßen Verfahrens; und
- Figur 3b: ein Flussdiagramm einer weiteren Ausführungsform des erfindungsgemäßen Verfahrens.

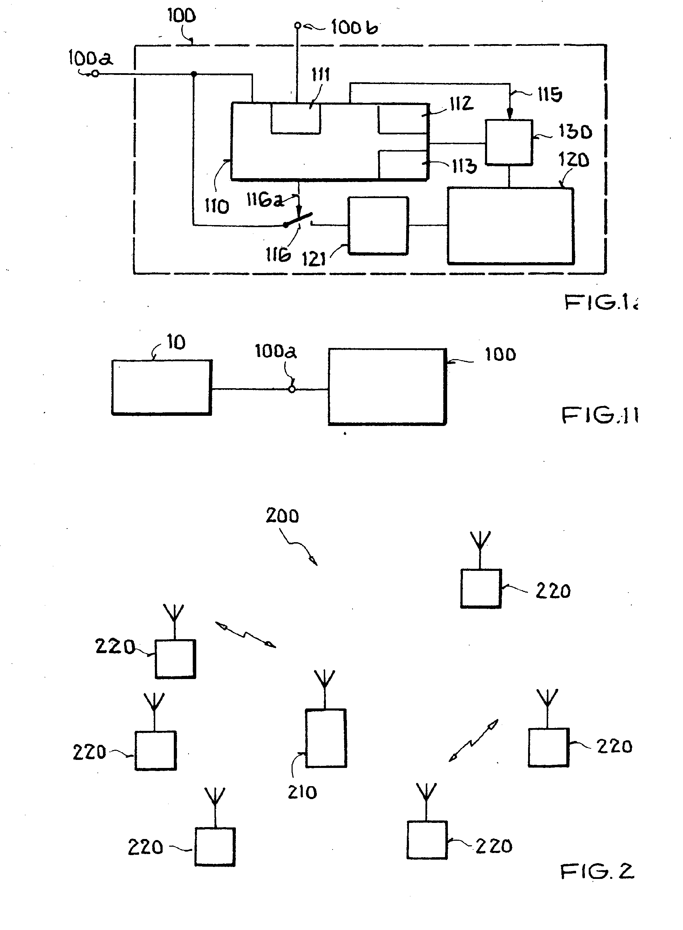

Figur 1a zeigt schematisch ein Blockschaltbild einer ersten Ausführungsform der erfindungsgemäßen integrierten Schaltung 100. Die integrierte Schaltung 100 weist eine erste Schaltungskomponente 110 auf, die über einen Pegelwandler 130 mit einer zweiten Schaltungskomponente 120 verbunden ist. Die Verbindung weist eine oder mehrere nicht näher bezeichnete Daten- bzw. Steuerleitungen auf, über die Signale zwischen der ersten und der zweiten Schaltungskomponente übertragen werden.

Die erste Schaltungskomponente 110 ist in einer CMOS-Halbleitertechnologie mit Strukturgrößen von etwa 0,36 µm realisiert und weist daher einen Betriebsspannungsbereich von etwa 1,8 V bis etwa 3,75 V auf. Eine Spannungsversorgung der ersten Schaltungskomponente 110 der integrierten Schaltung 100 kann somit über eine direkt an dem Anschluss 100a angeschlossene, nicht in Figur 1a abgebildete externe Spannungsquelle erfolgen.

Die zweite Schaltungskomponente 120 ist in einer CMOS-Halbleitertechnologie mit Strukturgrößen von etwa 0,18 µm realisiert und weist daher einen Betriebsspannungsbereich von etwa (1,8 ± 10%) V auf. Dementsprechend ist in der erfindungsgemäßen integrierten Schaltung 100 ein Spannungsregler 121 vorgesehen, der eingangsseitig ebenfalls an den Anschluss 100a beziehungsweise die externe Spannungsquelle anschließbar ist, und der ausgangsseitig die zweite Schaltungskomponente 120 mit ihrer Betriebsspannung von etwa 1,8 V versorgt.

Entsprechend den unterschiedlichen Betriebsspannungsbereichen der ersten beziehungsweise zweiten Schaltungskomponente 110, 120 nimmt der Pegelwandler 130 eine Umsetzung der jeweiligen Spannungspegel der zwischen den Schaltungskomponenten 110, 120 ausgetauschten Signale in an sich bekannter Weise vor.

Erfindungsgemäß ist der Pegelwandler 130 durch die erste Schaltungskomponente 110 steuerbar, was in Figur 1a durch den von der ersten Schaltungskomponente 110 ausgehenden Pfeil 115 symbolisiert ist. Insbesondere ist der Pegelwandler 130 durch die erste Schaltungskomponente 110 wahlweise aktivierbar beziehungsweise deaktivierbar, um einen Datenaustausch zwischen den Schaltungskomponenten 110, 120 zuzulassen bzw. zu verhindern.

Besonders vorteilhaft kann auf diese Weise verhindert werden, dass undefinierte Signalzustände, die z.B. vorübergehend von der zweiten Schaltungskomponente 120 ausgehen können, an die erste Schaltungskomponente 110 weitergeleitet werden, wodurch die Betriebssicherheit der integrierten Schaltung 100 gesteigert wird. Solche undefinierten Signalzustände können beispielsweise dann auftreten, wenn die zweite Schaltungskomponente 120 deaktiviert wird, insbesondere um in einen Ruhezustand oder dergleichen überzugehen. Ebenso ist es denkbar, den Pegelwandler 130 dann zu deaktivieren, wenn der Verdacht vorliegt, dass die zweite Schaltungskomponente 120 eine Betriebsstörung oder einen sonstigen Defekt aufweist.

Eine Aktivierung des Pegelwandlers 130 kann beispielsweise dann erfolgen, wenn ein Datenaustausch zwischen der ersten Schaltungskomponente 110 und der zweiten Schaltungskomponente 120 stattfinden soll bzw. wenn sichergestellt ist, dass keine undefinierten Signalzustände von der zweiten Schaltungskomponente 120 ausgehen.

Das Aktivieren bzw. Deaktivieren des Pegelwandlers 130 kann bei einer bevorzugten Ausführungsform der vorliegenden Erfindung durch die Verwendung einer verhältnismäßig einfachen Logikschaltung erfolgen, die eine an sich bekannte Verriegelung eines oder mehrerer der über den Pegelwandler 130 geführten Signale, beispielsweise mittels eines oder mehrerer UND-Gatter, vorsieht. Diese Logikschaltung kann vorteilhaft auch zumindest teilweise in den Pegelwandler 130 integriert sein.

Neben der reinen Verriegelung der über ihn geführten Signale kann der Pegelwandler 130 bei einer weiteren Ausführungsform der vorliegenden Erfindung darüber hinaus auch von einer ihm zugeordneten Versorgungsspannung (nicht gezeigt) getrennt werden, was insbesondere bei solchen Konfigurationen zweckmäßig ist, bei denen der Pegelwandler 130 eine nicht vernachlässigbare Ruhestromaufnahme aufweist. In diesem Fall kann die Verriegelung der Signale durch eine dem Pegelwandler 130 zugeordnete Logikschaltung bewirkt werden, die in einem Signalfluss beispielsweise zwischen der ersten Schaltungskomponente 110 und dem Pegelwandler 130 angeordnet ist. Hierdurch wird vorteilhaft auch das Auftreten von irregulären bzw. undefinierten Signalzuständen an entsprechenden Signaleingängen der ersten Schaltungskomponente 110 vermieden, das ansonsten aufgrund des Trennens des Pegelwandlers 130 selbst von seiner Versorgungsspannung auftreten könnte.

Besonders vorteilhaft ist der Spannungsregler 121 der integrierten Schaltung 100 erfindungsgemäß von der ersten Schaltungskomponente 110 steuerbar, was in Figur 1a durch den Schalter 116 und den von der ersten Schaltungskomponente 110 ausgehenden Pfeil 116a symbolisiert ist. D.h., der Spannungsregler 121 kann analog zu dem Pegelwandler 130 von der ersten Schaltungskomponente 110 wahlweise aktiviert beziehungsweise deaktiviert werden. Der Schalter 116 kann bei einer anderen Ausführungsform der Erfindung auch direkt in dem Spannungsregler 121 integriert sein, wobei der Spannungsregler 121 über eine entsprechende Steuerleitung 116a zur Ansteuerung des integrierten Schalters 116 verfügt.

Durch eine Deaktivierung des Spannungsreglers 121 wird gleichzeitig auch die gesamte zweite Schaltungskomponente 120 deaktiviert, so dass hierdurch insbesondere auch die im Betrieb der zweiten Schaltungskomponente 120 auftretenden Leckströme ausbleiben, wodurch die Leistungsaufnahme der integrierten Schaltung 100 insgesamt reduziert wird.

Besonders vorteilhaft wird gleichzeitig mit der Deaktivierung des Spannungsreglers 121 auch der Datenaustausch zwischen der zweiten Schaltungskomponente 120 und der ersten Schaltungskomponente 110 über den Pegelwandler 130 durch eine entsprechende Deaktivierung des Pegelwandlers 130 verhindert.

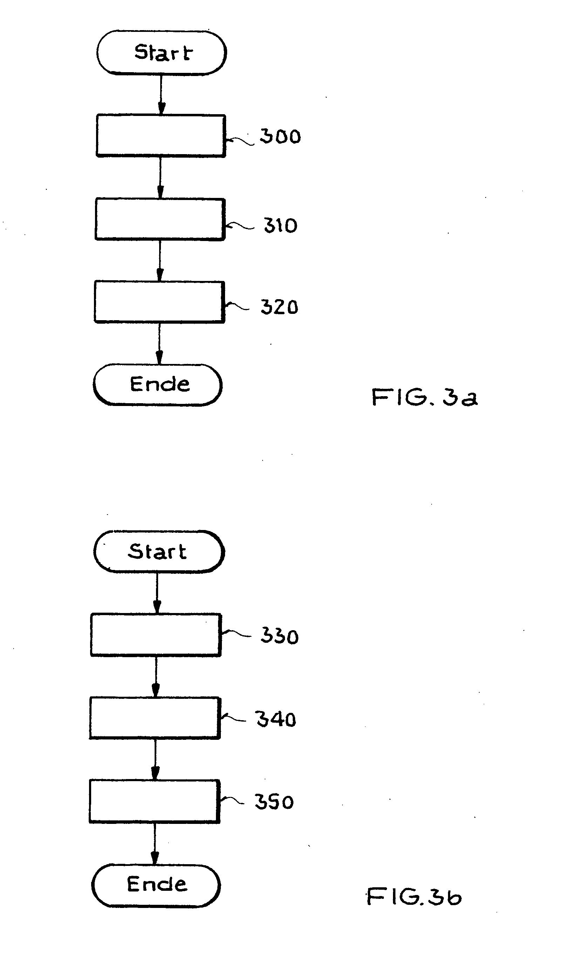

Die Steuerung der ersten Schaltungskomponente 110 erfolgt erfindungsgemäß über einen Zustandsautomaten 113, der beispielsweise unter Verwendung einer Vielzahl von einzelnen Speicherelementen innerhalb der ersten Schaltungskomponente 110 realisiert ist. Insbesondere steuert der Zustandsautomat 113 auch die anhand der Figuren 3a und 3b noch näher zu beschreibenden erfindungsgemäßen Verfahrensabläufe.

Generell kann der Zustandsautomat 113 auch zur Steuerung weiterer Komponenten der erfindungsgemäßen integrierten Schaltung 100 eingesetzt werden. Beispielsweise kann der Zustandsautomat 113 auch die zweite sowie ggf. weitere vorhandene Schaltungskomponenten steuern bzw. deren Betriebsinformationen speichern. Ein hierfür erforderlicher Datenaustausch erfolgt über die durch den Pegelwandler 130 realisierte Verbindung.

Die erfindungsgemäße Anordnung des Zustandsautomaten 113 in der ersten Schaltungskomponente 110 ist besonders vorteilhaft, weil die erste Schaltungskomponente 110 über den Anschluss 100a direkt mit einer externen Spannungsquelle 10 verbindbar ist, wie sie beispielhaft in Figur 1b abgebildet ist, und demnach permanent arbeitsfähig ist. Insbesondere bleibt die Versorgung der ersten Schaltungskomponente 110 auch dann erhalten, wenn weitere Schaltungskomponenten 120 zur Reduktion der Leistungsaufnahme der integrierten Schaltung 100 temporär deaktiviert werden. D.h., in dem Zustandsautomaten 113 gespeicherte Informationen, insbesondere auch Betriebsinformationen der temporär deaktivierten Schaltungskomponente 120, bleiben über deren Deaktivierung hinaus erhalten und stehen bei einer erneuten Aktivierung der entsprechenden Schaltungskomponente 120 verzögerungsfrei zur Verfügung.

Im Gegensatz zu herkömmlichen integrierten Schaltungen ist damit ein sicherer Betrieb der erfindungsgemäßen integrierten Schaltung 100 und ihrer Schaltungskomponenten 110, 120 sowie ein Erhalt gespeicherter Daten möglich, während gleichzeitig eine Reduktion der Leistungsaufnahme durch Deaktivieren ausgewählter Schaltungskomponenten 120 gegeben ist.

Aufgrund der Ausbildung der ersten Schaltungskomponente 110 in einer CMOS-Halbleitertechnologie mit Strukturgrößen von etwa 0,36 µm und einem entsprechend großen Betriebsspannungsbereich kann als externe Spannungsquelle 10 beispielsweise eine herkömmliche Batterie eingesetzt werden.

Alternativ zu dem Zustandsautomaten 113 oder zusätzlich hierzu können in der ersten Schaltungskomponente 110 auch weitere Speicherelemente 112 wie beispielsweise Flip-Flops angeordnet sein, die Konfigurationsinformationen der Schaltungskomponenten 110, 120 oder sonstige zu erhaltende Betriebsinformationen speichern.

Bei einer weiteren sehr vorteilhaften Ausführungsform der vorliegenden Erfindung ist vorgesehen, dass die erste Schaltungskomponente 110 eine Kommunikationsschnittstelle 111 (Figur 1a) aufweist, die über einen Anschluss 100b mit einer nicht in Figur 1a abgebildeten externen Komponente wie beispielsweise einer weiteren integrierten Schaltung oder dergleichen verbindbar ist.

Über die Kommunikationsschnittstelle 111 kann der integrierten Schaltung 100 beispielsweise signalisiert werden, dass ein Ruhezustand anzunehmen ist, in dem die zweite Schaltungskomponente 120, beziehungsweise deren Spannungsregler 121 und gegebenenfalls auch der Pegelwandler 130 zu deaktivieren ist. Ebenso kann ein Aktivieren der zweiten Schaltungskomponente 120 beziehungsweise des Spannungsreglers 121 durch eine entsprechende Datenübertragung über die Kommunikationsschnittstelle 111 an die integrierte Schaltung 100 initiiert werden. Bei der Kommunikationsschnittstelle 111 kann es sich beispielsweise um eine SPI (Serial Peripheral Interface)-Schnittstelle handeln oder auch um eine einzelne Steuerleitung.

Eine vergleichbare Steuerung, insbesondere Aktivierung und Deaktivierung des Pegelwandlers 130 und des Spannungsreglers 121 kann auch durch den Zustandsautomaten 113 oder eine sonstige in der integrierten Schaltung 100 vorgesehene Steuerlogik durchgeführt werden.

Bei einer weiteren sehr vorteilhaften Ausführungsform der erfindungsgemäßen integrierten Schaltung 100 ist vorgesehen, dass die integrierte Schaltung 100 mindestens eine Schaltungskomponente zur Realisierung eines Funk-Transceivers aufweist. Beispielsweise kann es sich bei dem Funk-Transceiver um einen zu dem IEEE 802.15.4/ZigBee Standard kompatiblen Transceiver handeln.

Durch die erfindungsgemäße Steuerbarkeit des Pegelwandlers 130 und die damit einhergehende erhöhte Flexibilität und Betriebssicherheit der integrierten Schaltung 100 insbesondere auch während einer temporären Deaktivierung von Schaltungskomponenten ist die Integration eines Funk-Transceivers in die erfindungsgemäße integrierte Schaltung 100 besonders zweckmäßig, weil sich durch diese Kombination eine besonders betriebssichere Schaltung mit einer besonders geringen Leistungsaufnahme ergibt.

Mit der erfindungsgemäßen integrierten Schaltung 100 können z.B. Sensorelemente oder sonstige Baugruppen mit einer Funkschnittstelle realisiert werden, die auch bei einem reinen Batteriebetrieb eine verhältnismäßig hohe Betriebsdauer von beispielsweise mehr als zwei Jahren aufweisen. Figur 2 zeigt beispielhaft ein Sensornetzwerk 200, das eine Vielzahl von Sensorelementen 220 aufweist, von denen jedes die erfindungsgemäße integrierte Schaltung 100 (Figur 1a) sowie ggf. weitere Komponenten wie z.B. Sensoren und dergleichen aufweist. Die Energieversorgung der einzelnen Sensorelemente 220 erfolgt jeweils über eine in das Sensorelement 220 integrierte Batterie, vgl. Figur 1b.

Wie bereits beschrieben ermöglicht die hohe Betriebssicherheit und Betriebsdauer der erfindungsgemäßen integrierten Schaltung 100 eine Vergrößerung der Wartungsintervalle entsprechender Sensorelemente 220 oder macht eine Wartung völlig überflüssig. Dadurch können insbesondere die bei herkömmlichen Systemen anfallenden Wartungskosten, z.B. für einen Batteriewechsel usw., reduziert werden.

Das Sensornetzwerk 200 aus Figur 2 verwendet beispielsweise ZigBee-kompatible Funk-Transceiver, die jeweils in Form einer entsprechenden Schaltungskomponente 120 (Figur 1a) in die erfindungsgemäße integrierte Schaltung 100 jedes Sensorelements 220 integriert sind. Wie in Figur 2 durch die Doppelpfeile angedeutet, ermöglicht die Integration der ZigBee-kompatiblen Funk-Transceiver einen drahtlosen Datenaustausch sowohl zwischen verschiedenen Sensorelementen 220 als auch zwischen einem Sensorelement 220 und einer mobilen Auslesevorrichtung 210, die beispielsweise von einer Bedienperson dazu eingesetzt werden kann, um auf einfache Art und Weise Sensordaten aus einem oder mehreren Sensorelementen 220 abzurufen.

Figur 3a zeigt eine erste Ausführungsform des erfindungsgemäßen Verfahrens, bei dem der integrierten Schaltung 100 (Figur 1a) z.B. über die Kommunikationsschnittstelle 111 in Schritt 300 (Figur 3a) signalisiert wird, dass ein Ruhezustand anzunehmen ist, um die Leistungsaufnahme der integrierten Schaltung 100 zu reduzieren. Dementsprechend deaktiviert die erste Schaltungskomponente 110 in Schritt 310 zunächst den Pegelwandler 130, und anschließend deaktiviert die erste Schaltungskomponente 110 in Schritt 320 den Spannungsregler 121. Durch das Deaktivieren des Pegelwandlers 130 in Schritt 310 wird zunächst sichergestellt, dass die nachfolgende Deaktivierung des Spannungsreglers 121 und damit eventuell einhergehende von der zweiten Schaltungskomponente 120 ausgehende ungültige Signalzustände, die bei dem Deaktivieren des sie versorgenden Spannungsreglers 121 auftreten können, nicht zu ungültigen Signalzuständen an den mit dem Pegelwandler 130 verbundenen Signaleingängen der ersten Schaltungskomponente 110 führen. Nachdem der Datenaustausch über den Pegelwandler 130 somit verriegelt worden ist, kann in Schritt 320 die zweite Schaltungskomponente 120 wie beschrieben außer Betrieb gesetzt werden.

Dadurch wird einerseits die Leistungsaufnahme des Spannungsreglers 121 minimiert und andererseits ergeben sich in der zweiten Schaltungskomponente 120 in diesem Zustand keine weiteren elektrischen Verluste durch Leckströme, so dass eine besonders wirksame Reduktion der Leistungsaufnahme gegeben ist. Durch die direkte Verbindung der ersten Schaltungskomponente 110 mit der externen Spannungsversorgung 10 bleiben in dem Zustandsautomaten 113 und in den Speicherelementen 112 gespeicherte Betriebsinformationen auch während des Ruhezustands sicher erhalten. Dadurch kann die zweite Schaltungskomponente 120 nach einer zukünftigen Reaktivierung ihren Betrieb an einem durch die gespeicherten Betriebsinformationen definierten Punkt wiederaufnehmen.

Das in Figur 3b angegebene Flussdiagramm zeigt beispielhaft die zum Verlassen des gemäß Figur 3a eingenommenen Ruhezustands erforderlichen Verfahrensschritte. Zunächst wird in Schritt 330 festgestellt, dass der Ruhezustand zu verlassen ist. Dies kann ebenfalls durch eine entsprechende Signalisierung über die Kommunikationsschnittstelle 111 durch eine externe Komponente erfolgen. Ebenso ist es möglich, dass ein nicht abgebildeter, in die integrierte Schaltung 100 integrierter Zeitgeber periodisch das Verlassen des Ruhezustands initiiert, usw.

Danach wird in Schritt 340 zunächst der Spannungsregler 121 (Figur 1a) über den Schalter 116 aktiviert, so dass die zweite Schaltungskomponente 120 wieder mit ihrer Betriebsspannung von etwa 1,8 V versorgt wird. Vorzugsweise wird in dem Schritt 340 auch ein Reset der zweiten Schaltungskomponente 120 durchgeführt, um einen definierten Ausgangszustand herzustellen. Anschließend wird in Schritt 350 schließlich wieder der Pegelwandler 130 aktiviert, um erneut einen Datenaustausch zwischen der nunmehr aktivierten zweiten Schaltungskomponente 120 und der ersten Schaltungskomponente 110 zuzulassen.

Um sicherzustellen, dass die zweite Schaltungskomponente 120 bei dem Aktivieren des Pegelwandlers 130 in Schritt 350 bereits voll funktionsfähig ist und demnach keine undefinierten Signalzustände ausgibt, kann nach dem Aktivieren des Spannungsreglers 121 in Schritt 340 eine vorgebbare Wartezeit eingehalten werden, bevor auch der Pegelwandler 130 aktiviert wird. Alternativ hierzu ist es auch möglich, dass die erste Schaltungskomponente 110 eine Rückmeldung des Spannungsreglers 121 analysiert, die das Erreichen seines normalen Betriebszustands und damit die ordnungsgemäße Bereitstellung der Betriebsspannung von etwa 1,8 V an die zweite Schaltungskomponente 120 anzeigt.

Weiter alternativ hierzu könnte die Rückmeldung des Spannungsreglers 121 auch direkt auf den Pegelwandler 130 wirken, um diesen direkt aktivieren zu können, sobald der Spannungsregler 121 auf eine Aktivierung durch die erste Schaltungskomponente 110 hin seinen normalen Betriebszustand angenommen hat. Dadurch entfällt vorteilhaft die Auswertung der. Rückmeldung durch die erste Schaltungskomponente 110. In diesem Fall erfolgt die Steuerung bzw. Aktivierung des Pegelwandlers 130 mittelbar durch die erste Schaltungskomponente 110. Bei dieser Erfindungsvariante kann eine Deaktivierung z.B. direkt von der ersten Schaltungskomponente 110 nur an den Spannungsregler 121 signalisiert werden, der die Deaktivierung seinerseits auch an den Pegelwandler 130 weiterleitet. D.h., es kann auf die in Figur 1a mit dem Pfeil 115 angedeutete Steuerleitung verzichtet werden, sofern eine entsprechende Steuerleitung zwischen dem Spannungsregler 121 und dem Pegelwandler 130 vorgesehen ist.

Generell können in die erfindungsgemäße integrierte Schaltung 100 neben der ersten und zweiten Schaltungskomponente auch weitere Schaltungskomponenten integriert werden. Besonders vorteilhaft sind diese weiteren Schaltungskomponenten ebenfalls über einen erfindungsgemäßen steuerbaren Pegelwandler 130 mit der ersten Schaltungskomponente 110 verbunden und vorzugsweise auch durch ihnen zugeordnete steuerbare Spannungsregler temporär deaktivierbar.

D.h., erfindungsgemäß können in der integrierten Schaltung 100 auch mehrere steuerbare Pegelwandler vorgesehen sein. Neben Pegelwandlern, die Spannungs- oder auch Strompegel ineinander umsetzen, kommt auch der Einsatz von elektrooptischen oder elektromechanischen Pegelwandlern in Betracht, wobei die über solche Pegelwandler angebundene zweite oder weitere Schaltungskomponente u.a. auch als photonische oder mechanische, insbesondere mikromechanische Schaltungskomponente oder als hybride Schaltungskomponente ausgebildet sein kann. Zur Realisierung eines elektromechanischen Pegelwandlers kann beispielsweise ein piezoelektrisches Element verwendet werden.

Sehr zweckmäßig ist die erste, permanent betriebene Schaltungskomponente 110 in einer CMOS-Halbleitertechnologie mit verhältnismäßig großen Strukturgrößen realisiert, so dass sie geringe Leckströme aufweist. Ferner ist es zweckmäßig, nur diejenigen Komponenten in die erste, permanent betriebene Schaltungskomponente 110 zu integrieren, die tatsächlich dauernd in Betrieb sein müssen. Alle weiteren Komponenten, die vorübergehend deaktivierbar sind, werden vorteilhaft in den weiteren Schaltungskomponenten 120 angeordnet. Diese weiteren Schaltungskomponenten 120 können vorteilhaft auch in einer oder mehreren verschiedenen CMOS-Halbleitertechnologien mit verhältnismäßig kleinen Strukturgrößen realisiert sein, so dass insgesamt eine höhere Integrationsdichte in der erfindungsgemäßen integrierten Schaltung 100 erreicht werden kann. Die mit sich verringernden Strukturgrößen ansteigenden Leckströme und die entsprechende Zunahme der Leistungsaufnahme der betreffenden Schaltungskomponenten kann durch eine zeitweilige Deaktivierung zumindest kompensiert werden.

Durch die Kombination des erfindungsgemäßen steuerbaren Pegelwandlers 130 mit der zeitweiligen Deaktivierung mancher Schaltungskomponenten kann die Ruhestromaufnahme der integrierten Schaltung 100 im Vergleich zu herkömmlichen integrierten Schaltungen um mindestens eine Größenordnung reduziert werden.

Das erfindungsgemäße Prinzip des steuerbaren Pegelwandlers 130 ist generell auch auf integrierte Schaltungen anwendbar, die auf anderen Halbleitertechnologien als der CMOS-Halbleitertechnologie beruhen. Das Vorsehen mehrerer steuerbarer Pegelwandler, die eine Umsetzung von Signalen zwischen mehreren verschiedenen Betriebsspannungsbereichen vorsehen, ist ebenfalls denkbar.

## Patentansprüche

1. Integrierte Schaltung (100) mit mindestens einer ersten Schaltungskomponente (110), und mit mindestens einer zweiten Schaltungskomponente (120), wobei die erste Schaltungskomponente (110) über einen Pegelwandler (130) mit der zweiten Schaltungskomponente (120) verbunden ist, **dadurch gekennzeichnet, dass** der Pegelwandler (130) von der ersten Schaltungskomponente (110) wahlweise aktivierbar bzw. deaktivierbar ist, um einen Datenaustausch zwischen der ersten Schaltungskomponente (110) und der zweiten Schaltungskomponente (120) zu ermöglichen beziehungsweise zu verhindern.

2. Integrierte Schaltung (100) nach Anspruch 1, **dadurch gekennzeichnet, dass** der Pegelwandler (130) so konfiguriert ist, dass er in seinem deaktivierten Zustand ein vorgebbares Signal an die erste Schaltungskomponente (110) und/oder an die zweite Schaltungskomponente (120) ausgibt.

3. Integrierte Schaltung (100) nach einem der vorstehenden Ansprüche, **dadurch gekennzeichnet, dass** die erste Schaltungskomponente (110) einen ersten Betriebsspannungsbereich aufweist, und dass die zweite Schaltungskomponente (120) einen von dem ersten Betriebsspannungsbereich verschiedenen zweiten Betriebsspannungsbereich aufweist.

4. Integrierte Schaltung (100) nach einem der vorstehenden Ansprüche, **dadurch gekennzeichnet, dass** die erste Schaltungskomponente (110) einen größeren Betriebsspannungsbereich aufweist als die zweite Schaltungskomponente (120).

5. Integrierte Schaltung (100) nach einem der vorstehenden Ansprüche, **gekennzeichnet durch** einen Anschluss (100a) zur Verbindung der integrierten Schaltung (100) mit einer externen Spannungsquelle (10), wobei der Anschluss (100a) vorzugsweise direkt mit der ersten Schaltungskomponente (110) verbunden ist.

6. Integrierte Schaltung (100) nach einem der vorstehenden Ansprüche, **gekennzeichnet durch** mindestens einen von der ersten Schaltungskomponente (110) aktivierbaren beziehungsweise deaktivierbaren Spannungsregler (121) zur Versorgung der zweiten Schaltungskomponente (120) und/oder weiterer Schaltungskomponenten.

7. Integrierte Schaltung (100) nach einem der vorstehenden Ansprüche, **gekennzeichnet durch** mindestens ein in der ersten Schaltungskomponente (110) angeordnetes Speicherelement (112), insbesondere ein Flip-Flop, und/oder einen in der ersten Schaltungskomponente (110) angeordneten Zustandsautomaten (113).

8. Integrierte Schaltung (100) nach einem der vorstehenden Ansprüche, **dadurch gekennzeichnet, dass** die erste Schaltungskomponente (110) eine Kommunikationsschnittstelle (111) aufweist, die über einen Anschluss (100b) mit einer externen Komponente verbindbar ist.

9. Integrierte Schaltung (100) nach einem der vorstehenden Ansprüche, **dadurch gekennzeichnet, dass** die integrierte Schaltung (100) mindestens eine weitere Schaltungskomponente aufweist, insbesondere zur Realisierung eines Funk-Transceivers.

10. Verfahren zum Betreiben einer integrierten Schaltung (100) mit mindestens einer ersten Schaltungskomponente (110), und mit mindestens einer zweiten Schaltungskomponente (120), wobei die erste Schaltungskomponente (110) über einen Pegelwandler (130) mit der zweiten Schaltungskomponente (120) verbunden ist, **dadurch gekennzeichnet, dass** der Pegelwandler (130) von der ersten Schaltungskomponente (110) wahlweise aktiviert beziehungsweise deaktiviert wird, um einen Datenaustausch zwischen der ersten Schaltungskomponente (110) und der zweiten Schaltungskomponente (120) zu ermöglichen beziehungsweise zu verhindern.

11. Verfahren nach Anspruch 10, **dadurch gekennzeichnet, dass** ein Spannungsregler (121) zur Versorgung der zweiten Schaltungskomponente (120) und/oder weiterer Schaltungskomponenten von der ersten Schaltungskomponente (110) deaktiviert wird, um die Leistungsaufnahme der integrierten Schaltung (100) zu verringern.

12. Verfahren nach einem der Ansprüche 10 oder 11, **dadurch gekennzeichnet, dass** ein/der Spannungsregler (121) zur Versorgung der zweiten Schaltungskomponente (120) und/oder weiterer Schaltungskomponenten von der ersten Schaltungskomponente (110) aktiviert wird.

13. Verfahren nach einem der Ansprüche 10 bis 12, **dadurch gekennzeichnet, dass** der Pegelwandler (130) nach einem/dem Spannungsregler (121) aktiviert wird, vorzugsweise nach Ablauf einer vorgebbaren Wartezeit seit dem Aktivieren des Spannungsreglers (121).

14. Verfahren nach Anspruch 13, **dadurch gekennzeichnet, dass** der Pegelwandler (130) erst dann aktiviert wird, wenn der Spannungsregler (121) das Erreichen seines Normalbetriebs signalisiert hat, bei dem der Spannungsregler (121) seine Nenn-Ausgangsspannung abgibt.

15. Verfahren nach einem der Ansprüche 10 bis 14, **dadurch gekennzeichnet, dass** der Pegelwandler (130) vor einem/dem Spannungsregler (121) deaktiviert wird.
